# EUROPEAN PATENT APPLICATION

(11) **EP 4 848 541 A1**
(43) Date of publication of application: **02.12.2026**
(21) Application number: 26181600.3
(22) Date of filing: 28.05.2026
(51) Int. Cl.: H02K 7/00, H02K 5/173, H02K 7/116, F16H 57/021

(54) **POWERTRAIN AND ELECTRIC VEHICLE**

(30) Priority: 29.05.2025 CN 202510718179
(71) Applicant: Huawei Technologies Co., Ltd., Shenzhen, Guangdong 518129 (CN)
(72) Inventor: SHAN, Runliu, Shenzhen, 518129 (CN); JIANG, Kui, Shenzhen, 518129 (CN); REN, Mengtian, Shenzhen, 518129 (CN); LIU, Xiaosu, Shenzhen, 518129 (CN)
(74) Representative: Gill Jennings & Every LLP

(57) **Abstract**

This application provides a powertrain and an electric vehicle. The powertrain includes a drive motor and a reducer. A housing of the powertrain includes a motor cavity and a reducer cavity. The motor cavity is provided to accommodate a motor rotor of the drive motor. The reducer cavity is provided to accommodate a parallel-axis gear set of the reducer. A rotating shaft of the drive motor includes a first segment, a second segment, and a third segment that are sequentially arranged. The first segment is configured to fasten the motor rotor, and the second segment is configured to fasten an inner ring of an intermediate bearing. The rotating shaft extends from the motor cavity to the reducer cavity through an intermediate bearing housing, and an inner circumferential wall of the intermediate bearing housing is configured to fasten an outer ring of the intermediate bearing. The third segment has a tooth portion, and the tooth portion is configured to engage with an intermediate driven gear in the parallel-axis gear set. An outer diameter of the tooth portion is less than or equal to an outer diameter of the second segment. In this application, a function of an input shaft of the reducer is integrated into the rotating shaft of the drive motor, so that problems of noise and potential failure caused by a spline fit between the rotating shaft and the input shaft can be avoided, improving NVH performance and safety performance of the electric vehicle.

## Description

### TECHNICAL FIELD

This application relates to the field of electric vehicle technologies, and in particular, to a powertrain and an electric vehicle.

### BACKGROUND

In the electric vehicle industry, a powertrain is a power source of an entire vehicle. With the development of electric vehicles, there are increasing requirements for NVH performance and miniaturization design of powertrains. In a powertrain, a motor transmits torque to an input shaft of a reducer through a motor shaft, to drive wheels to rotate. Currently, the motor shaft and the input shaft usually implement a transmission connection through a spline fit. However, the spline fit causes a low-order noise problem. During long-term operation of the powertrain, splines further face a risk of failure due to fretting wear. This is not conducive to improving operation efficiency of the powertrain and safety performance of an electric vehicle.

### SUMMARY

Embodiments of this application provide a powertrain and an electric vehicle.

According to a first aspect, an embodiment of this application provides a powertrain. The powertrain includes a drive motor and a reducer. A housing of the powertrain includes a motor cavity and a reducer cavity. The motor cavity is provided to accommodate a motor rotor of the drive motor. The reducer cavity is provided to accommodate a parallel-axis gear set of the reducer. A rotating shaft of the drive motor includes a first segment, a second segment, and a third segment that are sequentially arranged in an axial direction of the drive motor. The first segment is configured to fasten the motor rotor, and the second segment is configured to fasten an inner ring of an intermediate bearing. The first segment is located in the motor cavity, and the third segment is located in the reducer cavity.

The rotating shaft extends from the motor cavity to the reducer cavity through an intermediate bearing housing in the axial direction of the drive motor. An inner circumferential wall of the intermediate bearing housing is configured to fasten an outer ring of the intermediate bearing. The third segment has a tooth portion, and the tooth portion is configured to engage with an intermediate driven gear in the parallel-axis gear set. An outer diameter of the tooth portion is less than or equal to an outer diameter of the second segment.

In an embodiment of this application, to avoid existing problems of noise and fretting wear caused by a spline fit between a motor shaft and an input shaft, in this embodiment of this application, based on the rotating shaft of the drive motor, a function of the input shaft is integrated into the rotating shaft, that is, the rotating shaft is used to replace an existing combination of the motor shaft and the input shaft.

Specifically, the rotating shaft extends from the motor cavity to the reducer cavity, the first segment of the rotating shaft is located in the motor cavity, and the third segment of the rotating shaft is located in the reducer cavity, providing a prerequisite for integrating the function of the input shaft into the rotating shaft. The first segment is configured to fasten the motor rotor, so that the rotating shaft can directly receive torque transmitted by the motor rotor, functioning as the motor shaft. The third segment has the tooth portion, and the tooth portion is configured to engage with the intermediate driven gear. In other words, the tooth portion serves as an input gear to be in a transmission connection with the reducer, so that the rotating shaft can further transmit torque directly to the reducer. Because the rotating shaft eliminates a spline fit structure, in embodiments of this application, noise generated by the rotating shaft can be reduced, NVH performance can be improved, and a risk of failure of a transmission connection between the rotating shaft and the reducer can be reduced, prolonging a service life of the rotating shaft.

In an embodiment of this application, in addition to the first segment and the third segment, the rotating shaft further includes the second segment. The second segment is configured to fasten the inner ring of the intermediate bearing, the intermediate bearing housing is configured to fasten the outer ring of the intermediate bearing, and the intermediate bearing is for supporting the rotating shaft. The rotating shaft extends from the motor cavity to the reducer cavity through the intermediate bearing housing. In a process of mounting the rotating shaft, the tooth portion contacts the inner ring of the intermediate bearing before the second segment does. If the outer diameter of the tooth portion is greater than the outer diameter of the second segment, the tooth portion may be obstructed due to an excessively large outer diameter of the tooth portion during movement relative to the intermediate bearing, so that the second segment is hardly fastened to the inner ring of the intermediate bearing. This is not conducive to mounting and disassembly of the rotating shaft.

In an existing solution of a spline fit between a motor shaft and an input shaft, the motor shaft and the input shaft may be mounted sequentially in opposite directions, so that a problem that an input gear of the input shaft hinders mounting of the motor shaft and the input shaft can be avoided. In an embodiment of this application, the tooth portion is integrated into the third segment of the rotating shaft, and the third segment of the rotating shaft extends to the reducer cavity. Different from the existing solution, to apply the rotating shaft to the powertrain, this embodiment needs to avoid an influencing factor that interferes with mounting of the rotating shaft. Therefore, in an embodiment of this application, the outer diameter of the tooth portion is adjusted to be less than or equal to the outer diameter of the second segment. This facilitates reducing interference with mounting of the rotating shaft by the tooth portion, reducing mounting difficulty and costs of the rotating shaft.

In an embodiment of this application, the rotating shaft integrates the first segment, the second segment, and the tooth portion, and the first segment, the second segment, and the tooth portion may be machined integrally, to meet a coaxiality requirement. The rotating shaft does not need to reserve space for a spline fit, leading to high integration, and reducing an axial size of the rotating shaft. This helps implement miniaturization design of the powertrain.

In an embodiment, a first shoulder of the rotating shaft protrudes from the second segment in a radial direction of the drive motor, the first shoulder is configured to abut against one side surface of the inner ring of the intermediate bearing in the axial direction of the drive motor, and in the axial direction of the drive motor, the first shoulder is located on a side that is of the second segment and that faces away from the tooth portion.

In an embodiment of this application, the first shoulder is configured to abut against one side surface of the intermediate bearing in the axial direction of the drive motor, so that axial play of the intermediate bearing relative to the first shoulder can be reduced. This helps reduce wear on the rotating shaft and the intermediate bearing, improving operation efficiency of the powertrain.

In an embodiment of this application, from a perspective of avoiding interference with mounting of the rotating shaft, because an outer diameter of the first shoulder is greater than the outer diameter of the second segment, the first shoulder needs to be arranged on a side that is of the second segment and that faces away from the tooth portion. In other words, the first shoulder abuts against one side surface of the inner ring of the intermediate bearing after the inner ring of the intermediate bearing is fastened to the second segment, so that the first shoulder can be prevented from hindering mounting of the rotating shaft.

In an embodiment, an annular groove of the rotating shaft is recessed from the second segment in the radial direction of the drive motor, the annular groove is provided to fasten a circlip, the circlip is configured to abut against the other side surface of the inner ring of the intermediate bearing in the axial direction of the drive motor, an outer diameter of the circlip is greater than the outer diameter of the second segment, and the annular groove and the first shoulder are adjacently arranged on two sides of the second segment in the axial direction of the drive motor.

In an embodiment of this application, the first shoulder and the annular groove are located on the two sides of the second segment. The cooperation between the first shoulder and the circlip accommodated in the annular groove can limit the inner ring of the intermediate bearing in the axial direction, helping reduce axial play of the intermediate bearing and the rotating shaft. Both the annular groove and the tooth portion are located on a side that is of the second segment and that faces away from the first segment. Similar to the tooth portion, the annular groove has an inner diameter that needs to be less than the outer diameter of the second segment. To ensure that the circlip abuts against the inner ring of the intermediate bearing, the outer diameter of the circlip needs to be greater than the outer diameter of the second segment.

In an embodiment, an opening of the intermediate bearing housing faces away from the motor cavity, the rotating shaft passes through a bearing housing hole at a bottom of the intermediate bearing housing and extends to the reducer cavity, the bottom of the intermediate bearing housing is configured to abut against one side surface of the outer ring of the intermediate bearing in the axial direction of the drive motor, and an inner diameter of the bearing housing hole is less than an outer diameter of the outer ring of the intermediate bearing.

In an embodiment of this application, the bottom of the intermediate bearing housing includes the bearing housing hole, the bearing housing hole passes through the bottom of the intermediate bearing housing in the axial direction of the drive motor, and the third segment of the rotating shaft passes through the bearing housing hole and extends to the reducer cavity. The bottom of the intermediate bearing housing is further configured to abut against one side surface of the outer ring of the intermediate bearing. Therefore, the inner diameter of the bearing housing hole needs to be less than the outer diameter of the outer ring of the intermediate bearing, for the bottom of the intermediate bearing housing to reserve space for interaction with the intermediate bearing.

In an embodiment of this application, because the opening of the intermediate bearing housing faces away from the motor cavity, the third segment of the rotating shaft passes through the bottom of the intermediate bearing housing and the opening of the intermediate bearing housing sequentially during mounting. If the intermediate bearing is first fastened to the second segment of the rotating shaft, and then the intermediate bearing and the rotating shaft are mounted together, because the inner diameter of the bearing housing hole is less than the outer diameter of the outer ring of the intermediate bearing, the rotating shaft cannot continue to extend to the reducer cavity due to obstruction of the intermediate bearing by the bottom of the intermediate bearing housing. Therefore, in an embodiment of this application, the intermediate bearing needs to be mounted before the rotating shaft. The intermediate bearing is first mounted to the intermediate bearing housing, so that the intermediate bearing can assist in supporting the rotating shaft in a subsequent process of passing the rotating shaft sequentially through the bearing housing hole and the inner ring of the intermediate bearing, reducing mounting difficulty.

In an embodiment, in the axial direction of the drive motor, the first shoulder passes through the bearing housing hole and abuts against the one side surface of the inner ring of the intermediate bearing, and the inner diameter of the bearing housing hole is greater than an outer diameter of the first shoulder.

In an embodiment of this application, in the axial direction of the drive motor, the first shoulder is located on a side that is of the intermediate bearing and that faces away from the tooth portion. The first shoulder needs to pass through the bearing housing hole located at the bottom of the intermediate bearing housing before the first shoulder abuts against one side surface of the inner ring of the intermediate bearing. The outer diameter of the bearing housing hole is greater than the outer diameter of the first shoulder, so that wear on the first shoulder and the bearing housing hole can be reduced, reducing assembly and disassembly difficulty of the rotating shaft.

In an embodiment, a ratio of the inner diameter of the bearing housing hole to the outer diameter of the first shoulder is greater than or equal to 1.2.

In an embodiment of this application, the motor rotor is fastened to the first segment of the rotating shaft, and the motor rotor is usually mounted together with the rotating shaft. An outer diameter of the motor rotor is greater than the outer diameter of the outer ring of the intermediate bearing. During mounting, the motor rotor with a large outer diameter may obstruct an operator's view. Therefore, in an embodiment of this application, the ratio of the inner diameter of the bearing housing hole to the outer diameter of the first shoulder is adjusted to be greater than or equal to 1.2, so that a risk of collision between the rotating shaft and the bearing housing hole during mounting can be reduced.

In an embodiment, the first segment is further configured to fasten two end plates, the two end plates are located on two sides of the motor rotor in the axial direction of the drive motor, a second shoulder of the rotating shaft protrudes from the first segment in the radial direction of the drive motor, the motor rotor, one end plate, the second shoulder, and the first shoulder are sequentially arranged in the axial direction of the drive motor, and the second shoulder is configured to abut against the one end plate.

A difference between an outer diameter of the second shoulder and the outer diameter of the first shoulder, and a difference between the outer diameter of the second shoulder and the outer diameter of the second segment are both less than a difference between the outer diameter of the second shoulder and an outer diameter of the first segment.

In an embodiment of this application, the two end plates are adjacently arranged on the two sides of the motor rotor in the axial direction of the drive motor. In an embodiment, the two end plates can play a role in achieving dynamic balance of the motor rotor.

In an embodiment of this application, the rotating shaft includes a second shoulder, the outer diameter of the second shoulder is greater than the outer diameter of the first segment, and the second shoulder abuts against one end plate to limit the one end plate and the motor rotor. The first segment, the second shoulder, the first shoulder, and the second segment are sequentially arranged in the axial direction of the drive motor. The difference between the outer diameter of the second shoulder and the outer diameter of the first segment is relatively large. This helps increase a contact area between the second shoulder and one end plate, improving stability of a fixed connection between the motor rotor and one end plate. The difference between the outer diameter of the second shoulder and the outer diameter of the first shoulder, and the difference between the outer diameter of the second shoulder and the outer diameter of the second segment are relatively small. This helps reduce a degree of change of the outer diameter of the rotating shaft from the second shoulder to the first shoulder and the second segment, reducing a risk of stress concentration.

In an embodiment, the first segment is further configured to fasten a first shaft sleeve, the first shaft sleeve is configured to abut against the other end plate in the axial direction of the drive motor to fasten the motor rotor and the two end plates, the first shaft sleeve is located on a side that is of the other end plate and that faces away from the first shoulder, and an outer diameter of the first shaft sleeve is greater than the outer diameter of the first shoulder.

In an embodiment of this application, the first shaft sleeve and the second shoulder are respectively configured to abut against the other end plate and the one end plate. The cooperation between the first shaft sleeve and the second shoulder can fasten the motor rotor and the two end plates tightly, reducing axial play of the motor rotor.

In an embodiment of this application, the first shaft sleeve and the rotating shaft are of separate structures. Compared with the second shoulder, the first shaft sleeve may be adjusted in position relative to the rotating shaft, the motor rotor, and the other end plate. The first shaft sleeve with a relatively large outer diameter helps increase a contact area between the first shaft sleeve and the other end plate, enhancing stability of a fixed connection between the motor rotor and the rotating shaft and a fixed connection between the two end plates and the rotating shaft. Because the first shaft sleeve is located on a side that is of the other end plate and that faces away from the first shoulder, a large outer diameter of the first shaft sleeve does not interfere with mounting of the rotating shaft.

In an embodiment, the first segment and the third segment are respectively configured to fasten an inner ring of a motor bearing and an inner ring of a reducer bearing, a spacing between a cavity wall on one side of the reducer cavity and the motor rotor is greater than a spacing between a cavity wall on the other side of the reducer cavity and the motor rotor in the axial direction of the drive motor, the cavity wall on the one side of the reducer cavity includes a reducer bearing housing, an inner circumferential wall of the reducer bearing housing is configured to fasten an outer ring of the reducer bearing, and the tooth portion is adjacent to an opening of the reducer bearing housing.

A bottom of the reducer bearing housing is configured to fasten a shim, and there is a gap between the shim and the outer ring of the reducer bearing in the axial direction of the drive motor.

In an embodiment of this application, a bearing fastened to the rotating shaft includes the motor bearing, the intermediate bearing, and the reducer bearing that are sequentially arranged in the axial direction of the drive motor. The reducer bearing housing on a reducer end cover is configured to fasten the outer ring of the reducer bearing, and the opening of the reducer bearing housing faces the tooth portion in the axial direction of the drive motor. Because the rotating shaft integrates a function of the input shaft of the reducer, a size and a volume of the rotating shaft are both larger than those of the motor shaft. Therefore, in an embodiment of this application, a three-bearing structure is used, so that support effect on the rotating shaft can be enhanced by using a plurality of bearings, reducing a risk of bending and deformation of the rotating shaft.

In an embodiment of this application, the rotating shaft is essentially one shaft, and the three-bearing structure used on one shaft may cause an over-positioning problem. Over-positioning is a mechanical interference phenomenon in which a same degree of freedom of a workpiece is repeatedly restricted by a plurality of support points. Over-positioning caused by a three-bearing structure exacerbates bearing wear and interferes with torque transmission through the rotating shaft. To reduce an adverse impact of over-positioning on the rotating shaft and the bearing, in an embodiment of this application, the reducer bearing is spaced apart from the shim fastened to the bottom of the reducer bearing housing. A gap between the reducer bearing and the shim can provide an allowance for the rotating shaft to move in the axial direction of the drive motor, weakening a constraint of the reducer bearing on a degree of freedom of movement of the rotating shaft in the axial direction of the drive motor, thereby helping mitigate an axial over-positioning problem.

In an embodiment, the intermediate bearing housing is located on the cavity wall on the other side of the reducer cavity, the cavity wall on the other side of the reducer cavity is configured to fasten a pressing plate, the pressing plate is configured to abut against the other side surface of the outer ring of the intermediate bearing in the axial direction of the drive motor, and in the axial direction of the drive motor, the pressing plate is located on a side that is of the intermediate bearing and that faces the shim.

In an embodiment of this application, if a side surface of the outer ring of the reducer bearing abuts against the shim, when a direction of an axial force generated by the parallel-axis gear set on the rotating shaft is parallel to a direction from the first segment to the second segment, the axial force may be transmitted to the reducer bearing housing sequentially through the reducer bearing and the shim, and the reducer end cover bears the axial force. In an embodiment of this application, to mitigate an adverse impact of axial over-positioning, there is a gap between the outer ring of the reducer bearing and the shim. Therefore, before the outer ring of the reducer bearing is in contact with the shim, in an embodiment of this application, the pressing plate is used to transmit an axial force to the reducer cavity.

Specifically, the pressing plate is fastened to the cavity wall on the other side of the reducer cavity, and the pressing plate is configured to abut against the other side surface that is of the outer ring of the intermediate bearing and that faces the shim. When the direction of the axial force generated by the parallel-axis gear set on the rotating shaft is parallel to the direction from the first segment to the second segment, the axial force is transmitted to the reducer cavity sequentially through the intermediate bearing and the pressing plate. Before the outer ring of the reducer bearing is in contact with the shim, the pressing plate and the reducer cavity may be used to bear an axial force. This helps reduce axial play of the rotating shaft and enhance NVH performance. An interaction force between the rotating shaft and the pressing plate can enhance rigidity of the rotating shaft and the motor rotor, thereby increasing a critical rotational speed of the rotating shaft.

In an embodiment of this application, the pressing plate can further avoid a creep failure of the outer ring of the intermediate bearing. The inner ring of the intermediate bearing is fastened to the rotating shaft, and the outer ring of the intermediate bearing is fastened to the intermediate bearing housing. When the inner ring of the intermediate bearing rotates at a high speed with the rotating shaft, a rolling body located between the inner ring and the outer ring of the intermediate bearing may drive the outer ring of the intermediate bearing to slide relative to the intermediate bearing housing, causing outer ring creep of the intermediate bearing. In an embodiment of this application, when the rotating shaft integrates the first segment, the second segment, and the third segment, the pressing plate abuts against the outer ring of the intermediate bearing, so that the outer ring of the intermediate bearing can be limited in the axial direction. This helps reduce damage to the intermediate bearing and the intermediate bearing housing, increasing a service life and reliability of the intermediate bearing.

In an embodiment, a ratio of a length of the pressing plate to a length of the gap in the axial direction of the drive motor is greater than or equal to 20, and the ratio of the length of the pressing plate to the length of the gap in the axial direction of the drive motor is less than or equal to 80.

In an embodiment of this application, the length of the gap between the outer ring of the reducer bearing and the shim is related to a deformation amount of the pressing plate. If the gap between the outer ring of the reducer bearing and the shim is excessively small, the shim contacts the reducer bearing under a small axial force, so that a function of the pressing plate for bearing and transmitting the axial force is limited, and an interaction force between the pressing plate and the reducer cavity is small. This is not conducive to improving rigidity of the rotating shaft. If the gap between the outer ring of the reducer bearing and the shim is excessively large, the reducer bearing contacts the shim only after the pressing plate deforms greatly. This may cause damage to the pressing plate due to an excessively large deformation amount. In an embodiment of this application, the ratio of the axial length of the pressing plate to the axial length of the gap is controlled to be in a range of 20 to 80, so that the function of the pressing plate for bearing and transmitting the axial force and a service life of the pressing plate can be balanced.

In an embodiment, the length of the gap in the axial direction of the drive motor is greater than or equal to 0.05 mm, and the length of the gap in the axial direction of the drive motor is less than or equal to 0.2 mm.

In an embodiment of this application, in addition to being related to the deformation amount of the pressing plate, the length of the gap is further related to an axial clearance of the intermediate bearing and the reducer bearing. In an embodiment of this application, when the deformation amount of the pressing plate is controlled to be in an appropriate range, the axial length of the gap is adjusted to be in a range from 0.05 mm to 0.2 mm with reference to the axial clearance of the bearing.

In an embodiment, a spacing between the tooth portion and the intermediate bearing is greater than a spacing between the tooth portion and the reducer bearing in the axial direction of the drive motor, the rotating shaft is further configured to fasten a second shaft sleeve, the second shaft sleeve is configured to abut against the inner ring of the reducer bearing, the second shaft sleeve is located between the tooth portion and the reducer bearing in the axial direction of the drive motor, and an outer diameter of the second shaft sleeve is greater than the outer diameter of the second segment.

In an embodiment of this application, an axial length of the tooth portion needs to adapt to a gear in the parallel-axis gear set. Therefore, the axial length of the tooth portion is usually fixed. The second shaft sleeve mounted between the tooth portion and the inner ring of the reducer bearing can compensate for the axial length of the tooth portion, so that the inner ring of the reducer bearing can be limited by the second shaft sleeve, reducing axial play of the reducer bearing and the rotating shaft. The outer diameter of the second shaft sleeve is greater than the outer diameter of the second segment. This helps increase a contact area between the second shaft sleeve and the inner ring of the reducer bearing.

In an embodiment, a radial clearance of the intermediate bearing is greater than a radial clearance of at least one of the motor bearing or the reducer bearing.

In an embodiment of this application, based on a magnitude relationship among radial clearances of the motor bearing, the intermediate bearing, and the reducer bearing, the intermediate bearing in the radial direction of the drive motor may be used as a floating end, and the motor bearing and the reducer bearing may be used as fixed ends. This helps mitigate a radial over-positioning problem caused by use of a three-bearing structure on the rotating shaft.

According to a second aspect, an embodiment of this application provides an electric vehicle. The electric vehicle includes a power battery and the powertrain according to any embodiment in the first aspect. The powertrain is configured to receive power supply from the power battery and is configured to drive wheels of the electric vehicle.

In an embodiment of this application, the powertrain according to any embodiment in the first aspect is used in the electric vehicle. Because the rotating shaft of the powertrain eliminates a spline fit structure, noise generation can be reduced, and a service life of the rotating shaft can be prolonged, helping improve NVH performance and safety performance of the electric vehicle.

### BRIEF DESCRIPTION OF DRAWINGS

To describe technical solutions in embodiments of this application more clearly, the following describes the accompanying drawings used in embodiments of this application.
FIG. 1 is a diagram of an electric vehicle according to an embodiment of this application;
FIG. 2 is a diagram of a powertrain according to an embodiment of this application;
FIG. 3 is a diagram of a powertrain according to an embodiment of this application;
FIG. 4 is a diagram of a rotating shaft according to an embodiment of this application;
FIG. 5 is a cross-sectional view of a rotating shaft according to an embodiment of this application;
FIG. 6 is a diagram of a part of a powertrain according to an embodiment of this application;
FIG. 7 is a diagram of a part of a powertrain according to an embodiment of this application; and
FIG. 8 is a cross-sectional view of a part of a powertrain according to an embodiment of this application.

### DESCRIPTION OF EMBODIMENTS

The following describes technical solutions in embodiments of this application with reference to the accompanying drawings in embodiments of this application. It is clear that the described embodiments are merely some rather than all of embodiments of this application.

For ease of understanding, the following first explains and describes English abbreviations and related technical terms used in embodiments of this application.

NVH, an English abbreviation for noise, vibration, and harshness, is for measuring design and manufacturing quality of vehicles.

Parallel: "Parallel" defined in embodiments of this application is not limited to absolute parallelism. A definition of parallelism herein may be understood as approximate parallelism, allowing non-absolute parallelism resulting from influencing factors such as an assembly tolerance, a design tolerance, and structural flatness.

Currently, a powertrain faces a problem that NVH performance needs to be improved. Embodiments of this application provide a powertrain. The powertrain includes a drive motor and a reducer. A housing of the powertrain includes a motor cavity and a reducer cavity. The motor cavity is provided to fasten a motor stator of the drive motor and accommodate a motor rotor of the drive motor. The reducer cavity is provided to accommodate a parallel-axis gear set of the reducer. A rotating shaft of the drive motor includes a first segment, a second segment, and a third segment. The first segment, the second segment, and the third segment are sequentially arranged in an axial direction of the drive motor. The first segment is configured to fasten the motor rotor, the second segment is configured to fasten an inner ring of an intermediate bearing, the first segment is located in the motor cavity, and the third segment is located in the reducer cavity.

The rotating shaft extends from the motor cavity to the reducer cavity through an intermediate bearing housing in the axial direction of the drive motor. An inner circumferential wall of the intermediate bearing housing is configured to fasten an outer ring of the intermediate bearing. The third segment has a tooth portion, the tooth portion is configured to engage with an intermediate driven gear in the parallel-axis gear set, and the rotating shaft of the drive motor is in a transmission connection with the parallel-axis gear set of the reducer by the tooth portion. An outer diameter of the tooth portion is less than or equal to an outer diameter of the second segment.

In embodiments of this application, the rotating shaft of the drive motor has the tooth portion. A function of an input shaft of the reducer is integrated into the rotating shaft of the drive motor, so that problems of noise and potential failure caused by a spline fit between the rotating shaft and the input shaft can be avoided, improving NVH performance and safety performance of the electric vehicle. The powertrain provided in embodiments of this application may be used in an electric vehicle.

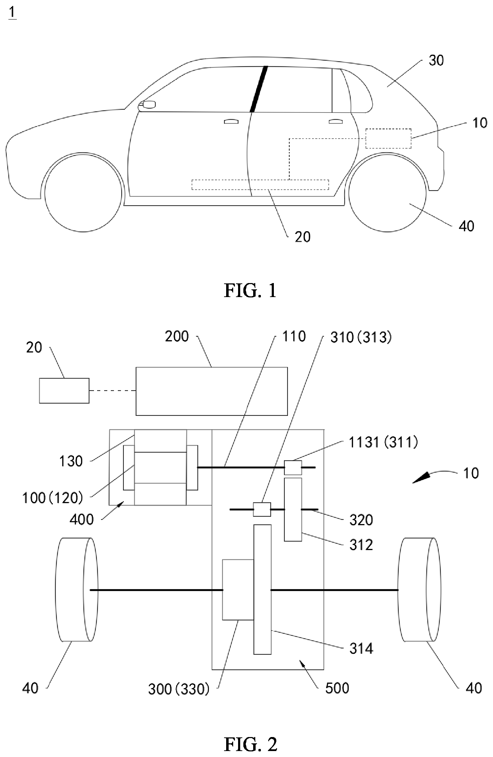

FIG. 1 is a diagram of an electric vehicle 1 according to an embodiment of this application. In an embodiment, the electric vehicle 1 includes a powertrain 10 and a power battery 20. In an embodiment of this application, the electric vehicle 1 is a wheeled device driven or powered by a power apparatus. The power battery 20 is configured to supply power to the powertrain 10. The power battery 20 may also be referred to as a battery pack. The powertrain 10 is a power source of the electric vehicle 1. The powertrain 10 is configured to drive wheels 40 of the electric vehicle 1. In an embodiment, the electric vehicle 1 further includes a frame 30, and the frame 30 is configured to mount the powertrain 10 and the power battery 20. The frame 30 is a structural framework of the electric vehicle 1, and can bear loads on the electric vehicle 1 from internal and external environments.

FIG. 2 is a diagram of the powertrain 10 according to an embodiment of this application. In an embodiment, the powertrain 10 includes a drive motor 100, a motor control unit 200, and a reducer 300. The power battery is configured to supply power to the drive motor 100 by using the motor control unit 200. Specifically, the motor control unit 200 is configured to convert a direct current provided by the power battery into an alternating current, and transmit the alternating current to the drive motor 100. The drive motor 100 is in a transmission connection with the reducer 300 to drive the wheels to rotate. In an embodiment, the motor control unit 200 is configured to control the drive motor 100 and the reducer 300. It should be noted that FIG. 2 merely shows an example in which there is an electrical connection relationship between the motor control unit 200 of the powertrain 10 and the power battery 20, and there is a transmission relationship between the drive motor 100 and the reducer 300 of the powertrain 10, but does not indicate actual structures, sizes, and position relationships of the powertrain 10, the power battery 20, and the wheels 40.

The drive motor 100 is configured to convert electric energy into mechanical energy, to generate driving torque. In an embodiment, the drive motor 100 includes a motor stator 130, a motor rotor 120, and a rotating shaft 110. A winding of the motor stator 130 generates alternating magnetic flux after an alternating current is applied. The alternating magnetic flux generated by the winding interacts with permanent magnet flux generated by the motor rotor 120, so that the motor rotor 120 rotates relative to the motor stator 130. The motor rotor 120 is fastened to the rotating shaft 110, so that the rotating shaft 110 rotates with the motor rotor 120. The motor stator 130 is rotatably connected to the rotating shaft 110, so that the rotating shaft 110 can rotate relative to the motor stator 130, to convert electric energy into mechanical energy. The rotating shaft 110 is configured to transfer mechanical energy to the reducer 300.

The reducer 300 is configured to change a transmission ratio between the drive motor 100 and the wheels. In an embodiment, the reducer 300 includes a parallel-axis gear set 310, an intermediate shaft 320, and a differential 330. The parallel-axis gear set 310 includes an input gear 311, an intermediate driven gear 312, an intermediate driving gear 313, and an output gear 314. The intermediate driven gear 312 and the intermediate driving gear 313 are fastened to the intermediate shaft 320, and the output gear 314 is fastened to the differential 330. The rotating shaft 110 of the drive motor 100 is configured to transmit torque to the input gear 311, and the input gear 311 is configured to engage with the intermediate driven gear 312. The intermediate driven gear 312 is configured to drive the intermediate shaft 320 and the intermediate driving gear 313 to rotate. The intermediate driving gear 313 is configured to engage with the output gear 314, and the output gear 314 is configured to drive the differential 330 to rotate. The differential 330 is configured to transmit torque to drive axle shafts, to drive the wheels to rotate, to enable the electric vehicle to move forward or move backward.

Currently, the powertrain usually implements mechanical energy transfer between a motor shaft of the drive motor and the input gear by using an input shaft of the reducer. The input shaft and the motor shaft of the drive motor implement a transmission connection through a spline fit. The spline fit is likely to cause an adverse impact on NVH performance of the powertrain, and splines also face a risk of failure due to fretting wear. This is not conducive to improving operation efficiency and safety performance of the powertrain and the electric vehicle.

In embodiments of this application, a structure for the transmission connection between the drive motor and the reducer is improved, so that an adverse impact of the spline fit on the powertrain can be avoided, helping improve NVH performance of the electric vehicle.

The following describes in detail the powertrain 10 provided in implementations of this application.

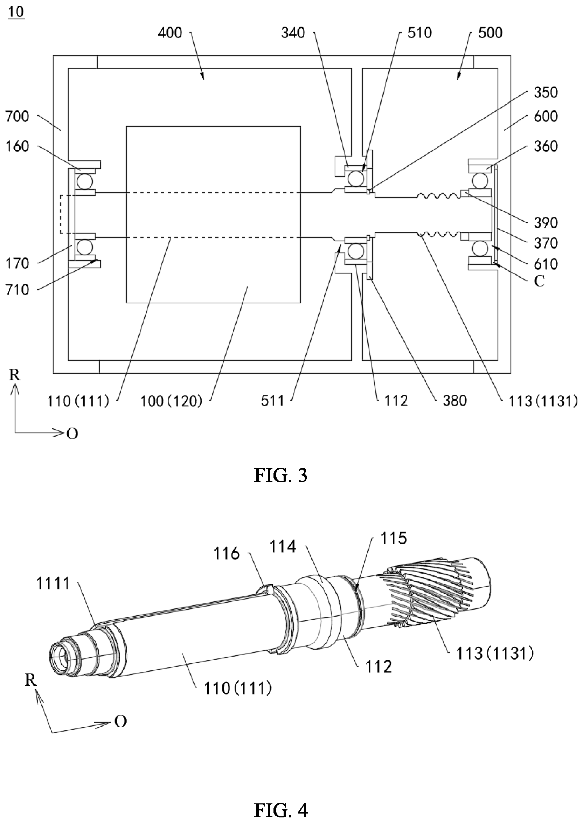

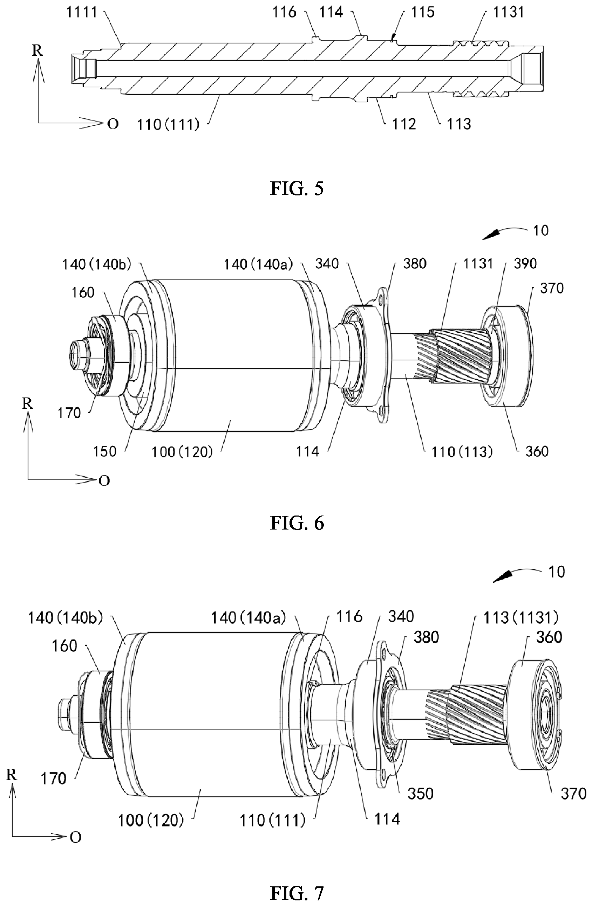

Refer to FIG. 2 to FIG. 5. FIG. 3 is a diagram of the powertrain 10 according to an embodiment of this application. FIG. 4 is a diagram of the rotating shaft 110 according to an embodiment of this application. FIG. 5 is a cross-sectional view of the rotating shaft 110 according to an embodiment of this application.

In an embodiment, the powertrain 10 includes a drive motor 100 and a reducer 300, a housing of the powertrain 10 includes a motor cavity 400 and a reducer cavity 500, the motor cavity 400 is provided to accommodate a motor rotor 120 of the drive motor 100, and the reducer cavity 500 is provided to accommodate a parallel-axis gear set 310 of the reducer 300. A rotating shaft 110 of the drive motor 100 includes a first segment 111, a second segment 112, and a third segment 113 that are sequentially arranged in an axial direction O of the drive motor 100. The first segment 111 is configured to fasten the motor rotor 120, the second segment 112 is configured to fasten an inner ring of an intermediate bearing 340, the first segment 111 is located in the motor cavity 400, and the third segment 113 is located in the reducer cavity 500.

The rotating shaft 110 extends from the motor cavity 400 to the reducer cavity 500 through an intermediate bearing housing 510 in the axial direction O of the drive motor 100. An inner circumferential wall of the intermediate bearing housing 510 is configured to fasten an outer ring of the intermediate bearing 340. The third segment 113 has a tooth portion 1131, and the tooth portion 1131 is configured to engage with an intermediate driven gear 312 in the parallel-axis gear set 310. An outer diameter of the tooth portion 1131 is less than or equal to an outer diameter of the second segment 112.

In an embodiment of this application, to avoid existing problems of noise and fretting wear caused by a spline fit between a motor shaft and an input shaft, in this embodiment of this application, based on the rotating shaft 110 of the drive motor 100, a function of the input shaft is integrated into the rotating shaft 110, that is, the rotating shaft 110 is used to replace an existing combination of the motor shaft and the input shaft.

Specifically, the rotating shaft 110 extends from the motor cavity 400 to the reducer cavity 500, the first segment 111 of the rotating shaft 110 is located in the motor cavity 400, and the third segment 113 of the rotating shaft 110 is located in the reducer cavity 500, providing a prerequisite for integrating the function of the input shaft into the rotating shaft 110. The first segment 111 is configured to fasten the motor rotor 120, so that the rotating shaft 110 can directly receive torque transmitted by the motor rotor 120, functioning as the motor shaft. The third segment 113 has the tooth portion 1131, and the tooth portion 1131 is configured to engage with the intermediate driven gear 312. In other words, the tooth portion 1131 serves as an input gear 311 to be in a transmission connection with the reducer 300, so that the rotating shaft 110 can further transmit torque directly to the reducer 300. Because the rotating shaft 110 eliminates a spline fit structure, in embodiments of this application, noise generated by the rotating shaft 110 can be reduced, NVH performance can be improved, and a risk of failure of a transmission connection between the rotating shaft 110 and the reducer 300 can be reduced, prolonging a service life of the rotating shaft 110.

In an embodiment of this application, in addition to the first segment 111 and the third segment 113, the rotating shaft 110 further includes the second segment 112. The second segment 112 is configured to fasten the inner ring of the intermediate bearing 340, the intermediate bearing housing 510 is configured to fasten the outer ring of the intermediate bearing 340, and the intermediate bearing 340 is for supporting the rotating shaft 110. The rotating shaft 110 extends from the motor cavity 400 to the reducer cavity 500 through the intermediate bearing housing 510. In a process of mounting the rotating shaft 110, the tooth portion 1131 contacts the inner ring of the intermediate bearing 340 before the second segment 112 does. If the outer diameter of the tooth portion 1131 is greater than the outer diameter of the second segment 112, the tooth portion 1131 may be obstructed due to an excessively large outer diameter of the tooth portion 1131 during movement relative to the intermediate bearing 340, so that the second segment 112 is hardly fastened to the inner ring of the intermediate bearing 340. This is not conducive to mounting and disassembly of the rotating shaft 110.

In an existing solution of a spline fit between a motor shaft and an input shaft, the motor shaft and the input shaft may be mounted sequentially in opposite directions, so that a problem that an input gear of the input shaft hinders mounting of the motor shaft and the input shaft can be avoided. In an embodiment of this application, the tooth portion 1131 is integrated into the third segment 113 of the rotating shaft 110, and the third segment 113 of the rotating shaft 110 extends to the reducer cavity 500. Different from the existing solution, to apply the rotating shaft 110 to the powertrain 10, this embodiment needs to avoid an influencing factor that interferes with mounting of the rotating shaft 110. Therefore, in an embodiment of this application, the outer diameter of the tooth portion 1131 is adjusted to be less than or equal to the outer diameter of the second segment 112. This facilitates reducing interference with mounting of the rotating shaft 110 by the tooth portion 1131, reducing mounting difficulty and costs of the rotating shaft 110.

In an embodiment of this application, the rotating shaft 110 integrates the first segment 111, the second segment 112, and the tooth portion 1131, and the first segment 111, the second segment 112, and the tooth portion 1131 may be machined integrally, to meet a coaxiality requirement. The rotating shaft 110 does not need to reserve space for a spline fit, leading to high integration, and reducing an axial size of the rotating shaft 110. This helps implement miniaturization design of the powertrain 10.

It should be noted that FIG. 3 merely shows an example in which the rotating shaft 110 integrates the first segment 111, the second segment 112, and the third segment 113, but does not indicate actual structures and sizes of the rotating shaft 110, the intermediate bearing 340, and the intermediate bearing housing 510.

In an embodiment, the second segment is located in the motor cavity or the reducer cavity. In an embodiment, one part of the second segment is located in the motor cavity, and the other part of the second segment is located in the reducer cavity.

In an embodiment, the rotating shaft is a hollow shaft, and a shaft cavity of the rotating shaft may be configured to transmit cooling oil, to implement cooling of the drive motor and lubrication of the reducer.

In an embodiment, the shaft cavity of the rotating shaft is further configured to accommodate a conductive bearing, and the conductive bearing is configured to transfer a shaft current on the rotating shaft to the housing of the powertrain, to implement grounding of the rotating shaft.

Refer to FIG. 4 to FIG. 6. FIG. 6 is a diagram of a part of the powertrain 10 according to an embodiment of this application. In an embodiment, a first shoulder 114 of the rotating shaft 110 protrudes from the second segment 112 in a radial direction R of the drive motor 100, the first shoulder 114 is configured to abut against one side surface of the inner ring of the intermediate bearing 340 in the axial direction O of the drive motor 100, and in the axial direction O of the drive motor 100, the first shoulder 114 is located on a side that is of the second segment 112 and that faces away from the tooth portion 1131.

In an embodiment of this application, the first shoulder 114 is configured to abut against one side surface of the intermediate bearing 340 in the axial direction O of the drive motor 100, so that axial play of the intermediate bearing 340 relative to the first shoulder 114 can be reduced. This helps reduce wear on the rotating shaft 110 and the intermediate bearing 340, improving operation efficiency of the powertrain 10.

In an embodiment of this application, from a perspective of avoiding interference with mounting of the rotating shaft 110, because an outer diameter of the first shoulder 114 is greater than the outer diameter of the second segment 112, the first shoulder 114 needs to be arranged on a side that is of the second segment 112 and that faces away from the tooth portion 1131. In other words, the first shoulder 114 abuts against one side surface of the inner ring of the intermediate bearing 340 after the inner ring of the intermediate bearing 340 is fastened to the second segment 112, so that the first shoulder 114 can be prevented from hindering mounting of the rotating shaft 110.

Refer to FIG. 4, FIG. 5, and FIG. 7. FIG. 7 is a diagram of a part of the powertrain 10 according to an embodiment of this application. In an embodiment, an annular groove 115 of the rotating shaft 110 is recessed from the second segment 112 in the radial direction R of the drive motor 100, the annular groove 115 is provided to fasten a circlip 350, the circlip 350 is configured to abut against the other side surface of the inner ring of the intermediate bearing 340 in the axial direction O of the drive motor 100, an outer diameter of the circlip 350 is greater than the outer diameter of the second segment 112, and the annular groove 115 and the first shoulder 114 are adjacently arranged on two sides of the second segment 112 in the axial direction O of the drive motor 100.

In an embodiment of this application, the first shoulder 114 and the annular groove 115 are located on the two sides of the second segment 112. The cooperation between the first shoulder 114 and the circlip 350 accommodated in the annular groove 115 can limit the inner ring of the intermediate bearing 340 in the axial direction, helping reduce axial play of the intermediate bearing 340 and the rotating shaft 110. Both the annular groove 115 and the tooth portion 1131 are located on a side that is of the second segment 112 and that faces away from the first segment 111. Similar to the tooth portion 1131, the annular groove 115 has an inner diameter that needs to be less than the outer diameter of the second segment 112. To ensure that the circlip 350 abuts against the inner ring of the intermediate bearing 340, the outer diameter of the circlip 350 needs to be greater than the outer diameter of the second segment 112. In an embodiment, the circlip 350 may be mounted into the annular groove 115 after the rotating shaft 110 and the intermediate bearing 340 are mounted.

Still refer to FIG. 3. In an embodiment, an opening of the intermediate bearing housing 510 faces away from the motor cavity 400, the rotating shaft 110 passes through a bearing housing hole 511 at a bottom of the intermediate bearing housing 510 and extends to the reducer cavity 500, the bottom of the intermediate bearing housing 510 is configured to abut against one side surface of the outer ring of the intermediate bearing 340 in the axial direction O of the drive motor 100, and an inner diameter of the bearing housing hole 511 is less than an outer diameter of the outer ring of the intermediate bearing 340.

In an embodiment of this application, the bottom of the intermediate bearing housing 510 includes the bearing housing hole 511, the bearing housing hole 511 passes through the bottom of the intermediate bearing housing 510 in the axial direction O of the drive motor 100, and the third segment 113 of the rotating shaft 110 passes through the bearing housing hole 511 and extends to the reducer cavity 500. The bottom of the intermediate bearing housing 510 is further configured to abut against one side surface of the outer ring of the intermediate bearing 340. Therefore, the inner diameter of the bearing housing hole 511 needs to be less than the outer diameter of the outer ring of the intermediate bearing 340, for the bottom of the intermediate bearing housing 510 to reserve space for interaction with the intermediate bearing 340.

In an embodiment of this application, because the opening of the intermediate bearing housing 510 faces away from the motor cavity 400, the third segment 113 of the rotating shaft 110 passes through the bottom of the intermediate bearing housing 510 and the opening of the intermediate bearing housing 510 sequentially during mounting. If the intermediate bearing 340 is first fastened to the second segment 112 of the rotating shaft 110, and then the intermediate bearing 340 and the rotating shaft 110 are mounted together, because the inner diameter of the bearing housing hole 511 is less than the outer diameter of the outer ring of the intermediate bearing 340, the rotating shaft 110 cannot continue to extend to the reducer cavity 500 due to obstruction of the intermediate bearing 340 by the bottom of the intermediate bearing housing 510. Therefore, in an embodiment of this application, the intermediate bearing 340 needs to be mounted before the rotating shaft 110. The intermediate bearing 340 is first mounted to the intermediate bearing housing 510, so that the intermediate bearing 340 can assist in supporting the rotating shaft 110 in a subsequent process of passing the rotating shaft 110 sequentially through the bearing housing hole 511 and the inner ring of the intermediate bearing 340, reducing mounting difficulty. In an embodiment, a mounting direction of the rotating shaft 110 is parallel to a gravity direction.

Still refer to FIG. 3. In an embodiment, in the axial direction O of the drive motor 100, the first shoulder 114 passes through the bearing housing hole 511 and abuts against the one side surface of the inner ring of the intermediate bearing 340, and the inner diameter of the bearing housing hole 511 is greater than an outer diameter of the first shoulder 114.

In an embodiment of this application, in the axial direction O of the drive motor 100, the first shoulder 114 is located on a side that is of the intermediate bearing 340 and that faces away from the tooth portion 1131. The first shoulder 114 needs to pass through the bearing housing hole 511 located at the bottom of the intermediate bearing housing 510 before the first shoulder 114 abuts against one side surface of the inner ring of the intermediate bearing 340. The outer diameter of the bearing housing hole 511 is greater than the outer diameter of the first shoulder 114, so that wear on the first shoulder 114 and the bearing housing hole 511 can be reduced, reducing assembly and disassembly difficulty of the rotating shaft 110.

It should be noted that FIG. 3 merely shows an example in which the bottom of the intermediate bearing housing 510 has the bearing housing hole 511 and there is a position relationship between the rotating shaft 110 and the bearing housing hole, but does not indicate an actual size of the bearing housing hole 511.

In an embodiment, a ratio of the inner diameter of the bearing housing hole 511 to the outer diameter of the first shoulder 114 is greater than or equal to 1.2.

In an embodiment of this application, the motor rotor 120 is fastened to the first segment 111 of the rotating shaft 110, and the motor rotor 120 is usually mounted together with the rotating shaft 110. An outer diameter of the motor rotor 120 is greater than the outer diameter of the outer ring of the intermediate bearing 340. During mounting, the motor rotor 120 with a large outer diameter may obstruct an operator's view. Therefore, in an embodiment of this application, the ratio of the inner diameter of the bearing housing hole 511 to the outer diameter of the first shoulder 114 is adjusted to be greater than or equal to 1.2, so that a risk of collision between the rotating shaft 110 and the bearing housing hole 511 during mounting can be reduced.

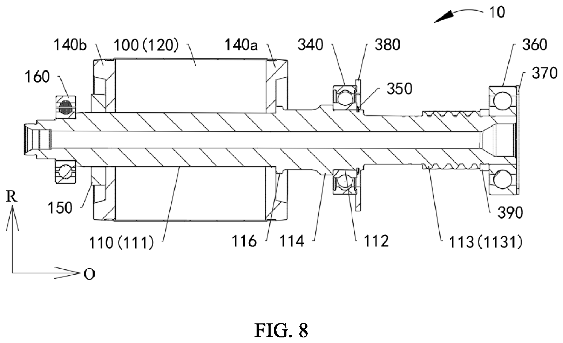

Refer to FIG. 6 to FIG. 8. FIG. 8 is a cross-sectional view of a part of the powertrain 10 according to an embodiment of this application. In an embodiment, the first segment 111 is further configured to fasten two end plates 140, the two end plates 140 are located on two sides of the motor rotor 120 in the axial direction O of the drive motor 100, a second shoulder 116 of the rotating shaft 110 protrudes from the first segment 111 in the radial direction R of the drive motor 100, the motor rotor 120, one end plate 140, the second shoulder 116, and the first shoulder 114 are sequentially arranged in the axial direction O of the drive motor 100, and the second shoulder 116 is configured to abut against the one end plate 140.

A difference between an outer diameter of the second shoulder 116 and the outer diameter of the first shoulder 114, and a difference between the outer diameter of the second shoulder 116 and the outer diameter of the second segment 112 are both less than a difference between the outer diameter of the second shoulder 116 and an outer diameter of the first segment 111. It should be noted that the three differences are all absolute values.

In an embodiment of this application, the two end plates 140 are adjacently arranged on the two sides of the motor rotor 120 in the axial direction O of the drive motor 100. In an embodiment, the two end plates 140 can play a role in achieving dynamic balance of the motor rotor 120.

In an embodiment of this application, for ease of description, one end plate 140 is denoted as an end plate 140a. In an embodiment of this application, the rotating shaft 110 includes a second shoulder 116, the outer diameter of the second shoulder 116 is greater than the outer diameter of the first segment 111, and the second shoulder 116 abuts against the end plate 140a to limit the end plate 140a and the motor rotor 120. The first segment 111, the second shoulder 116, the first shoulder 114, and the second segment 112 are sequentially arranged in the axial direction O of the drive motor 100. The difference between the outer diameter of the second shoulder 116 and the outer diameter of the first segment 111 is relatively large. This helps increase a contact area between the second shoulder 116 and the end plate 140a, improving stability of a fixed connection between the motor rotor 120 and the end plate 140a. The difference between the outer diameter of the second shoulder 116 and the outer diameter of the first shoulder 114, and the difference between the outer diameter of the second shoulder 116 and the outer diameter of the second segment 112 are relatively small. This helps reduce a degree of change of the outer diameter of the rotating shaft 110 from the second shoulder 116 to the first shoulder 114 and the second segment 112, reducing a risk of stress concentration.

Still refer to FIG. 6 and FIG. 8. In an embodiment, the first segment 111 is further configured to fasten a first shaft sleeve 150, the first shaft sleeve 150 is configured to abut against the other end plate 140 in the axial direction O of the drive motor 100 to fasten the motor rotor 120 and the two end plates 140, the first shaft sleeve 150 is located on a side that is of the other end plate 140 and that faces away from the first shoulder 114, and an outer diameter of the first shaft sleeve 150 is greater than the outer diameter of the first shoulder 114.

In an embodiment of this application, for ease of description, the other end plate 140 is denoted as an end plate 140b. The first shaft sleeve 150 and the second shoulder 116 are respectively configured to abut against the end plate 140b and the end plate 140a. The cooperation between the first shaft sleeve 150 and the second shoulder 116 can fasten the motor rotor 120 and the two end plates 140 tightly, reducing axial play of the motor rotor 120.

In an embodiment of this application, the first shaft sleeve 150 and the rotating shaft 110 are of separate structures. Compared with the second shoulder 116, the first shaft sleeve 150 may be adjusted in position relative to the rotating shaft 110, the motor rotor 120, and the end plate 140b. The first shaft sleeve 150 with a relatively large outer diameter helps increase a contact area between the first shaft sleeve 150 and the end plate 140b, enhancing stability of a fixed connection between the motor rotor 120 and the rotating shaft 110 and a fixed connection between the two end plates 140 and the rotating shaft 110. Because the first shaft sleeve 150 is located on a side that is of the end plate 140b and that faces away from the first shoulder 114, a large outer diameter of the first shaft sleeve 150 does not interfere with mounting of the rotating shaft 110.

Still refer to FIG. 3 and FIG. 7. In an embodiment, the first segment 111 and the third segment 113 are respectively configured to fasten an inner ring of a motor bearing 160 and an inner ring of a reducer bearing 360, a spacing between a cavity wall on one side of the reducer cavity 500 and the motor rotor 120 is greater than a spacing between a cavity wall on the other side of the reducer cavity 500 and the motor rotor 120 in the axial direction O of the drive motor 100, the cavity wall on the one side of the reducer cavity 500 includes a reducer bearing housing 610, an inner circumferential wall of the reducer bearing housing 610 is configured to fasten an outer ring of the reducer bearing 360, and the tooth portion 1131 is adjacent to an opening of the reducer bearing housing 610.

A bottom of the reducer bearing housing 610 is configured to fasten a shim 370, and there is a gap C between the shim 370 and the outer ring of the reducer bearing 360 in the axial direction O of the drive motor 100.

In an embodiment of this application, in the axial direction O of the drive motor 100, the cavity wall on the one side of the reducer cavity 500 is away from the motor rotor 120, and the cavity wall on the other side of the reducer cavity is close to the motor rotor 120. In an embodiment, the cavity wall on the one side of the reducer cavity 500 and the cavity wall on the other side of the reducer cavity 500 are of separate structures. For example, in an embodiment, the housing of the powertrain 10 includes an intermediate separator plate and a reducer end cover 600, the intermediate separator plate is located between the motor cavity 400 and the reducer cavity 500 in the axial direction O of the drive motor 100, and the reducer end cover 600 is configured to enclose the reducer cavity 500 together with the intermediate separator plate. In other words, the cavity wall on the one side of the reducer cavity is the reducer end cover 600, and the cavity wall on the other side of the reducer cavity is the intermediate separator plate.

In an embodiment of this application, a bearing fastened to the rotating shaft 110 includes the motor bearing 160, the intermediate bearing 340, and the reducer bearing 360 that are sequentially arranged in the axial direction O of the drive motor 100. In an embodiment, the inner ring of the motor bearing 160, the inner ring of the intermediate bearing 340, and the inner ring of the reducer bearing 360 form interference fits respectively with the first segment 111, the second segment 112, and the third segment 113 of the rotating shaft 110. The reducer bearing housing 610 on the reducer end cover 600 is configured to fasten the outer ring of the reducer bearing 360, and the opening of the reducer bearing housing 610 faces the tooth portion 1131 in the axial direction O of the drive motor 100.

In an embodiment of this application, because the rotating shaft 110 integrates a function of the input shaft of the reducer 300, a size and a volume of the rotating shaft 110 are both larger than those of the motor shaft. Therefore, in an embodiment of this application, a three-bearing structure is used, so that support effect on the rotating shaft 110 can be enhanced by using a plurality of bearings, reducing a risk of bending and deformation of the rotating shaft 110.

In an embodiment of this application, the rotating shaft 110 is essentially one shaft, and the three-bearing structure used on one shaft may cause an over-positioning problem. Over-positioning is a mechanical interference phenomenon in which a same degree of freedom of a workpiece is repeatedly restricted by a plurality of support points. Over-positioning caused by a three-bearing structure exacerbates bearing wear and interferes with torque transmission through the rotating shaft 110. To reduce an adverse impact of over-positioning on the rotating shaft 110 and the bearing, in an embodiment of this application, the reducer bearing 360 is spaced apart from the shim 370 fastened to the bottom of the reducer bearing housing 610. A gap C between the reducer bearing 360 and the shim 370 can provide an allowance for the rotating shaft 110 to move in the axial direction O of the drive motor 100, weakening a constraint of the reducer bearing 360 on a degree of freedom of movement of the rotating shaft 110 in the axial direction O of the drive motor 100, thereby helping mitigate an axial over-positioning problem.

It should be noted that, to clearly show that the shim 370 and the reducer bearing 360 are spaced apart in an embodiment of this application, the gap C between the shim 370 and the outer ring of the reducer bearing 360 is enlarged in FIG. 3. This does not indicate an actual size of the gap C.

In an embodiment, the shim 370 is a C-shaped shim, and the shim 370 is clamped to the bottom of the reducer bearing housing 610.

Still refer to FIG. 3. In an embodiment, in the axial direction O of the drive motor 100, a spacing between a cavity wall on one side of the motor cavity 400 and the tooth portion 1131 is greater than a spacing between a cavity wall on the other side of the motor cavity 400 and the tooth portion 1131. The cavity wall on the one side of the motor cavity 400 includes a motor bearing housing 710. An inner circumferential wall of the motor bearing housing 710 is configured to fasten an outer ring of the motor bearing 160. An opening of the motor bearing housing 710 faces the motor rotor 120 in the axial direction O of the drive motor 100. In an embodiment, the cavity wall on the one side of the motor cavity 400 and the cavity wall on the other side of the motor cavity 400 are of separate structures. For example, in an embodiment, the housing of the powertrain 10 includes a motor end cover 700, and the motor end cover 700 is configured to enclose the motor cavity 400 together with the intermediate separator plate. In other words, the cavity wall on the one side of the motor cavity 400 is the motor end cover 700, and the cavity wall on the other side of the motor cavity 400 is the intermediate separator plate.

FIG. 3 merely shows an example of a position relationship among the motor bearing housing 710 on the motor end cover 700, the motor bearing 160, and the motor rotor 120, but does not indicate specific structures and sizes of the motor bearing housing 710 and the motor bearing 160.

In an embodiment, the motor bearing housing 710, the intermediate bearing housing 510, and the reducer bearing housing 610 are all of a groove-shaped structure.

Still refer to FIG. 5 and FIG. 8. In an embodiment, the first segment 111 includes a shoulder 1111, the shoulder 1111 is configured to abut against the inner ring of the motor bearing 160, and in the axial direction O of the drive motor 100, the shoulder 1111 is located on a side that is of the first shaft sleeve 150 and that faces away from the motor rotor 120. The first segment 111 is further configured to fasten a wave shim 170. The wave shim 170 is configured to abut against the outer ring of the motor bearing 160. In the axial direction O of the drive motor 100, the wave shim 170 is located between a bottom of the motor bearing housing 710 and the motor bearing 160. The cooperation between the shoulder 1111 and the wave shim 170 helps reduce axial play of the motor bearing 160.

In an embodiment, the first segment is further configured to fasten a resolver rotor, and the motor end cover is configured to fasten a resolver stator. In the axial direction of the drive motor, the resolver rotor and the resolver stator are located at an end that is of the motor bearing and that faces away from the motor rotor. The resolver rotor and resolver stator are configured to detect a position and a rotational speed of the motor rotor.

Still refer to FIG. 3 and FIG. 7. In an embodiment, the intermediate bearing housing 510 is located on the cavity wall on the other side of the reducer cavity 500, the cavity wall on the other side of the reducer cavity 500 is configured to fasten a pressing plate 380, the pressing plate 380 is configured to abut against the other side surface of the outer ring of the intermediate bearing 340 in the axial direction O of the drive motor 100, and in the axial direction O of the drive motor 100, the pressing plate 380 is located on a side that is of the intermediate bearing 340 and that faces the shim 370.

In an embodiment of this application, if a side surface of the outer ring of the reducer bearing 360 abuts against the shim 370, when a direction of an axial force generated by the parallel-axis gear set on the rotating shaft 110 is parallel to a direction from the first segment 111 to the second segment 112, the axial force may be transmitted to the reducer bearing housing 610 sequentially through the reducer bearing 360 and the shim 370, and the reducer end cover 600 bears the axial force. In an embodiment of this application, to mitigate an adverse impact of axial over-positioning, there is a gap C between the outer ring of the reducer bearing 360 and the shim 370. Therefore, before the outer ring of the reducer bearing 360 is in contact with the shim 370, in an embodiment of this application, the pressing plate 380 is used to transmit an axial force to the reducer cavity 500.

Specifically, the pressing plate 380 is fastened to the cavity wall on the other side of the reducer cavity 500, and the pressing plate 380 is configured to abut against the other side surface that is of the outer ring of the intermediate bearing 340 and that faces the shim 370. When the direction of the axial force generated by the parallel-axis gear set on the rotating shaft 110 is parallel to the direction from the first segment 111 to the second segment 112, the axial force is transmitted to the reducer cavity 500 sequentially through the intermediate bearing 340 and the pressing plate 380. Before the outer ring of the reducer bearing 360 is in contact with the shim 370, the pressing plate 380 and the reducer cavity 500 may be used to bear an axial force. This helps reduce axial play of the rotating shaft 110 and enhance NVH performance. An interaction force between the rotating shaft 110 and the pressing plate 380 can enhance rigidity of the rotating shaft 110 and the motor rotor 120, thereby increasing a critical rotational speed of the rotating shaft 110.

In an embodiment of this application, the pressing plate 380 can further avoid a creep failure of the outer ring of the intermediate bearing 340. The inner ring of the intermediate bearing 340 is fastened to the rotating shaft 110, and the outer ring of the intermediate bearing 340 is fastened to the intermediate bearing housing 510. When the inner ring of the intermediate bearing 340 rotates at a high speed with the rotating shaft 110, a rolling body located between the inner ring and the outer ring of the intermediate bearing 340 may drive the outer ring of the intermediate bearing 340 to slide relative to the intermediate bearing housing 510, causing outer ring creep of the intermediate bearing 340. In an embodiment of this application, when the rotating shaft 110 integrates the first segment 111, the second segment 112, and the third segment 113, the pressing plate 380 abuts against the outer ring of the intermediate bearing 340, so that the outer ring of the intermediate bearing 340 can be limited in the axial direction. This helps reduce damage to the intermediate bearing 340 and the intermediate bearing housing 510, increasing a service life and reliability of the intermediate bearing 340.

It should be noted that FIG. 3 merely shows an example of a position relationship among the pressing plate 380, the intermediate bearing 340, and the shim 370, but does not indicate specific structures and sizes of the pressing plate 380, the intermediate bearing 340, and the shim 370.

In an embodiment, the pressing plate 380 is fastened to a cavity wall on a side of the reducer cavity 500 through a screw connection.

In an embodiment, the pressing plate 380 surrounds the opening of the intermediate bearing housing 510, and the pressing plate 380 is configured to enclose a part of the intermediate bearing housing 510.

In an embodiment, when a direction of an axial force generated by the parallel-axis gear set on the rotating shaft 110 is parallel to a direction from the second segment 112 to the first segment 111, the axial force may be transmitted to the reducer cavity 500 sequentially through the circlip 350 and the intermediate bearing 340.

In an embodiment, a ratio of a length of the pressing plate 380 to a length of the gap C in the axial direction O of the drive motor 100 is greater than or equal to 20, and the ratio of the length of the pressing plate 380 to the length of the gap C in the axial direction O of the drive motor 100 is less than or equal to 80.

In an embodiment of this application, the length of the gap C between the outer ring of the reducer bearing 360 and the shim 370 is related to a deformation amount of the pressing plate 380. If the gap C between the outer ring of the reducer bearing 360 and the shim 370 is excessively small, the shim 370 contacts the reducer bearing 360 under a small axial force, so that a function of the pressing plate 380 for bearing and transmitting the axial force is limited, and an interaction force between the pressing plate 380 and the reducer cavity 500 is small. This is not conducive to improving rigidity of the rotating shaft 110. If the gap C between the outer ring of the reducer bearing 360 and the shim 370 is excessively large, the reducer bearing 360 contacts the shim 370 only after the pressing plate 380 deforms greatly. This may cause damage to the pressing plate 380 due to an excessively large deformation amount. In an embodiment of this application, the ratio of the axial length of the pressing plate 380 to the axial length of the gap C is controlled to be in a range of 20 to 80, so that the function of the pressing plate 380 for bearing and transmitting the axial force and a service life of the pressing plate 380 can be balanced.

In an embodiment, in the axial direction O of the drive motor 100, the ratio of the length of the pressing plate 380 to the length of the gap C may be 20, 30, 40, 50, 60, 70, or 80.

In an embodiment, the length of the gap C in the axial direction O of the drive motor 100 is greater than or equal to 0.05 mm, and the length of the gap C in the axial direction O of the drive motor 100 is less than or equal to 0.2 mm.

In an embodiment of this application, in addition to being related to the deformation amount of the pressing plate 380, the length of the gap C is further related to an axial clearance of the intermediate bearing 340 and the reducer bearing 360. In an embodiment of this application, when the deformation amount of the pressing plate 380 is controlled to be in an appropriate range, the axial length of the gap C is adjusted to be in a range from 0.05 mm to 0.2 mm with reference to the axial clearance of the bearing. In an embodiment, the length of the gap C is further related to a material of the pressing plate 380.

In an embodiment, in the axial direction O of the drive motor 100, the length of the gap C may be 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm.

Still refer to FIG. 6 and FIG. 8. In an embodiment, a spacing between the tooth portion 1131 and the intermediate bearing 340 is greater than a spacing between the tooth portion 1131 and the reducer bearing 360 in the axial direction O of the drive motor 100, the rotating shaft 110 is further configured to fasten a second shaft sleeve 390, the second shaft sleeve 390 is configured to abut against the inner ring of the reducer bearing 360, the second shaft sleeve 390 is located between the tooth portion 1131 and the reducer bearing 360 in the axial direction O of the drive motor 100, and an outer diameter of the second shaft sleeve 390 is greater than the outer diameter of the second segment 112.

In an embodiment of this application, an axial length of the tooth portion 1131 needs to adapt to a gear in the parallel-axis gear set. Therefore, the axial length of the tooth portion 1131 is usually fixed. The second shaft sleeve 390 mounted between the tooth portion 1131 and the inner ring of the reducer bearing 360 can compensate for the axial length of the tooth portion 1131, so that the inner ring of the reducer bearing 360 can be limited by the second shaft sleeve 390, reducing axial play of the reducer bearing 360 and the rotating shaft 110. The outer diameter of the second shaft sleeve 390 is greater than the outer diameter of the second segment 112. This helps increase a contact area between the second shaft sleeve 390 and the inner ring of the reducer bearing 360.

In an embodiment, a radial clearance of the intermediate bearing 340 is greater than a radial clearance of at least one of the motor bearing 160 or the reducer bearing 360.

In an embodiment of this application, based on a magnitude relationship among radial clearances of the motor bearing 160, the intermediate bearing 340, and the reducer bearing 360, the intermediate bearing 340 in the radial direction R of the drive motor 100 may be used as a floating end, and the motor bearing 160 and the reducer bearing 360 may be used as fixed ends. This helps mitigate a radial over-positioning problem caused by use of a three-bearing structure on the rotating shaft 110.

In an embodiment, a radial clearance of the intermediate bearing 340 is greater than a radial clearance of each of the motor bearing 160 or the reducer bearing 360.

In an embodiment, a radial clearance of at least one of the reducer bearing 360 or the intermediate bearing 340 is greater than a radial clearance of the motor bearing 160.

The following describes a method for mounting the powertrain provided in embodiments of this application.

The motor stator is mounted into the motor cavity by shrink-fitting, so that the motor stator is fastened to the cavity wall of the motor cavity. After the reducer cavity is heated, outer rings of tapered roller bearings of the intermediate shaft and the differential are mounted. The intermediate bearing is mounted into the intermediate bearing housing, and the pressing plate is fastened around the opening of the intermediate bearing housing by using a screw. The motor rotor, the two end plates, the first shaft sleeve, the motor bearing, and the resolver rotor are press-fitted to the first segment of the rotating shaft, and the conductive bearing is press-fitted to the shaft cavity of the rotating shaft. The motor rotor is mounted into the motor cavity from the drive motor side. The intermediate bearing is press-fitted using tooling until the intermediate bearing is fully attached to the first shoulder, the screw on the pressing plate is tightened, and the circlip is mounted into the annular groove. The shaft sleeve and the reducer side bearing are mounted to the third segment of the rotating shaft. The wave shim is mounted into the motor bearing housing, the motor end cover and the motor cavity are assembled, and the resolver stator is mounted to the motor end cover. The shim is mounted into the reducer bearing housing on the reducer end cover. The intermediate shaft and the differential with the tapered roller bearings are mounted into the reducer cavity, and the reducer end cover and the reducer cavity are assembled.

The foregoing describes in detail the powertrain and the electric vehicle provided in embodiments of this application. The principles and embodiments in this application are described in this specification by using specific examples. The descriptions about embodiments are merely provided to help understand the method in this application and core ideas thereof. In addition, a person of ordinary skill in the art may make modifications to the specific embodiments and the application scope based on the idea of this application. In conclusion, the content of this specification shall not be construed as a limitation on this application.

## Claims

1. A powertrain, wherein the powertrain comprises a drive motor and a reducer, a housing of the powertrain comprises a motor cavity and a reducer cavity, the motor cavity is provided to accommodate a motor rotor of the drive motor, the reducer cavity is provided to accommodate a parallel-axis gear set of the reducer, a rotating shaft of the drive motor comprises a first segment, a second segment, and a third segment that are sequentially arranged in an axial direction of the drive motor, the first segment is configured to fasten the motor rotor, the second segment is configured to fasten an inner ring of an intermediate bearing, the first segment is located in the motor cavity, and the third segment is located in the reducer cavity, wherein
the rotating shaft extends from the motor cavity to the reducer cavity through an intermediate bearing housing in the axial direction of the drive motor, an inner circumferential wall of the intermediate bearing housing is configured to fasten an outer ring of the intermediate bearing, the third segment has a tooth portion, the tooth portion is configured to engage with an intermediate driven gear in the parallel-axis gear set, and an outer diameter of the tooth portion is less than or equal to an outer diameter of the second segment.

2. The powertrain according to claim 1, wherein a first shoulder of the rotating shaft protrudes from the second segment in a radial direction of the drive motor, the first shoulder is configured to abut against one side surface of the inner ring of the intermediate bearing in the axial direction of the drive motor, and in the axial direction of the drive motor, the first shoulder is located on a side that is of the second segment and that faces away from the tooth portion.

3. The powertrain according to claim 2, wherein an annular groove of the rotating shaft is recessed from the second segment in the radial direction of the drive motor, the annular groove is provided to fasten a circlip, the circlip is configured to abut against the other side surface of the inner ring of the intermediate bearing in the axial direction of the drive motor, an outer diameter of the circlip is greater than the outer diameter of the second segment, and the annular groove and the first shoulder are adjacently arranged on two sides of the second segment in the axial direction of the drive motor.

4. The powertrain according to claim 2 or 3, wherein an opening of the intermediate bearing housing faces away from the motor cavity, the rotating shaft passes through a bearing housing hole at a bottom of the intermediate bearing housing and extends to the reducer cavity, the bottom of the intermediate bearing housing is configured to abut against one side surface of the outer ring of the intermediate bearing in the axial direction of the drive motor, and an inner diameter of the bearing housing hole is less than an outer diameter of the outer ring of the intermediate bearing.

5. The powertrain according to claim 4, wherein in the axial direction of the drive motor, the first shoulder passes through the bearing housing hole and abuts against the one side surface of the inner ring of the intermediate bearing, and the inner diameter of the bearing housing hole is greater than an outer diameter of the first shoulder.

6. The powertrain according to claim 5, wherein a ratio of the inner diameter of the bearing housing hole to the outer diameter of the first shoulder is greater than or equal to 1.2.

7. The powertrain according to any one of claims 2 to 5, wherein the first segment is further configured to fasten two end plates, the two end plates are located on two sides of the motor rotor in the axial direction of the drive motor, a second shoulder of the rotating shaft protrudes from the first segment in the radial direction of the drive motor, the motor rotor, one end plate, the second shoulder, and the first shoulder are sequentially arranged in the axial direction of the drive motor, and the second shoulder is configured to abut against the one end plate, wherein
a difference between an outer diameter of the second shoulder and the outer diameter of the first shoulder, and a difference between the outer diameter of the second shoulder and the outer diameter of the second segment are both less than a difference between the outer diameter of the second shoulder and an outer diameter of the first segment.

8. The powertrain according to claim 7, wherein the first segment is further configured to fasten a first shaft sleeve, the first shaft sleeve is configured to abut against the other end plate in the axial direction of the drive motor to fasten the motor rotor and the two end plates, the first shaft sleeve is located on a side that is of the other end plate and that faces away from the first shoulder, and an outer diameter of the first shaft sleeve is greater than the outer diameter of the first shoulder.

9. The powertrain according to any one of claims 1 to 8, wherein the first segment and the third segment are respectively configured to fasten an inner ring of a motor bearing and an inner ring of a reducer bearing, a spacing between a cavity wall on one side of the reducer cavity and the motor rotor is greater than a spacing between a cavity wall on the other side of the reducer cavity and the motor rotor in the axial direction of the drive motor, the cavity wall on the one side of the reducer cavity comprises a reducer bearing housing, an inner circumferential wall of the reducer bearing housing is configured to fasten an outer ring of the reducer bearing, and the tooth portion is adjacent to an opening of the reducer bearing housing, wherein
a bottom of the reducer bearing housing is configured to fasten a shim, and there is a gap between the shim and the outer ring of the reducer bearing in the axial direction of the drive motor.

10. The powertrain according to claim 9, wherein the intermediate bearing housing is located on the cavity wall on the other side of the reducer cavity, the cavity wall on the other side of the reducer cavity is configured to fasten a pressing plate, the pressing plate is configured to abut against the other side surface of the outer ring of the intermediate bearing in the axial direction of the drive motor, and in the axial direction of the drive motor, the pressing plate is located on a side that is of the intermediate bearing and that faces the shim.

11. The powertrain according to claim 10, wherein a ratio of a length of the pressing plate to a length of the gap in the axial direction of the drive motor is greater than or equal to 20, and the ratio of the length of the pressing plate to the length of the gap in the axial direction of the drive motor is less than or equal to 80.

12. The powertrain according to claim 10 or 11, wherein the length of the gap in the axial direction of the drive motor is greater than or equal to 0.05 mm, and the length of the gap in the axial direction of the drive motor is less than or equal to 0.2 mm.

13. The powertrain according to any one of claims 10 to 12, wherein a spacing between the tooth portion and the intermediate bearing is greater than a spacing between the tooth portion and the reducer bearing in the axial direction of the drive motor, the rotating shaft is further configured to fasten a second shaft sleeve, the second shaft sleeve is configured to abut against the inner ring of the reducer bearing, the second shaft sleeve is located between the tooth portion and the reducer bearing in the axial direction of the drive motor, and an outer diameter of the second shaft sleeve is greater than the outer diameter of the second segment.

14. The powertrain according to any one of claims 10 to 12, wherein a radial clearance of the intermediate bearing is greater than a radial clearance of at least one of the motor bearing or the reducer bearing.

15. An electric vehicle, wherein the electric vehicle comprises a power battery and the powertrain according to any one of claims 1 to 14, and the powertrain is configured to receive power supply from the power battery and is configured to drive wheels of the electric vehicle.
